# EUROPEAN PATENT APPLICATION

(11) **EP 4 375 692 A1**
(43) Date of publication of application: **29.05.2024**
(21) Application number: 23212019.6
(22) Date of filing: 24.11.2023
(51) Int. Cl.: G01S 3/46

(54) **ANGLE DETERMINATION METHOD AND APPARATUS, AND STORAGE MEDIUM**

(30) Priority: 25.11.2022 CN 202211493688
(71) Applicant: Beijing Xiaomi Mobile Software Co., Ltd., Beijing 100085 (CN)
(72) Inventor: QIAO, Guangjun, Beijing, 100085 (CN)
(74) Representative: dompatent von Kreisler Selting Werner - Partnerschaft von Patent- und Rechtsanwälten mbB

(57) **Abstract**

The present disclosure provides angle determination methods and apparatuses, and storage media. The method includes: receiving (201) a channel switch message sent by a second device before completing an information interaction with the second device in a measurement report phase; switching (202) from a first channel to a second channel based on the channel switch message; wherein the first channel is used for the first device to receive a first signal transmitted by the second device and the second channel is used for the first device to receive a second signal transmitted by the second device; and determining (203), according to the first signal and the second signal, a target angle of arrival AOA of a signal from the second device to the first device.

## Description

### TECHNICAL FIELD

The present disclosure relates to the field of communication technologies, and in particular, to angle determination methods and apparatuses, and storage media.

### BACKGROUND

At present, an electronic device can measure an angle of arrival (AOA) of a signal transmitted by another electronic device through ultra-wide band (UWB) technology, and then perform ranging and positioning between devices based on this angle.

It is generally necessary to realize this angle measurement through at least two antennas deployed on the electronic device. However, if a physical distance between any two antennas is greater than half a wavelength of the signal, the AOA determined by the electronic device based on a receiving phase difference of the signal transmitted by the electronic device at the opposite end is not unique, which in turn leads to the angle measurement result cannot be accurately determined, and in turn leads to the ranging result and the positioning result between the devices cannot be accurately determined.

### SUMMARY

In view of this, the present disclosure provides angle determination methods and apparatuses, and storage media.

According to a first aspect of the present disclosure, an angle determination method is provided, which is applied to a first device, including:
receiving a channel switch message sent by a second device before completing an information interaction with the second device in a measurement report phase;
switching from a first channel to a second channel based on the channel switching information; wherein the first channel is used for the first device to receive a first signal transmitted by the second device and the second channel is used for the first device to receive a second signal transmitted by the second device; and
determining, according to the first signal and the second signal, a target angle of arrival AOA of a signal from the second device to the first device.

Optionally, receiving the channel switch message sent by the second device before completing the information interaction with the second device in the measurement report phase includes:
receiving the channel switch message sent by the second device after completing an information interaction with the second device in a ranging phase and before interacting with the second device with information in the measurement report phase.

Preferably, the method further includes:
sending a control message to the second device in response to determining that the first device is an initiator for initiating ranging; wherein the control message carries a designated field, and the designated field is used for instructing the second device to send the channel switch message.

Optionally, the method further includes:
receiving a control message sent by the second device in response to determining that the first device is a responder for responding ranging; wherein the control message carries a designated field, and the designated field is used for instructing the second device to send the channel switch message.

Preferably, the designated field is a ranging device management list RDML field.

Optionally, the designated field is used for indicating at least one of:
target time unit information of the channel switch message sent by the second device to the first device; wherein the target time unit information includes an indication that a target time unit of the channel switch message is located before a time unit where the first device and the second device complete the information interaction in the measurement ranging report phase; or
second channel identification.

Preferably, the number of the second device is more than one, and different second devices correspond to different target time units.

Optionally, at least two antennas are deployed on the first device, and determining, according to the first signal and the second signal, the target AOA of the signal from the second device to the first device includes:
determining a first receiving phase difference for receiving the first signal through the at least two antennas;
determining a second receiving phase difference for receiving the second signal through the at least two antennas;
determining a target difference between the first receiving phase difference and the second receiving phase difference;
determining, according to one-to-one correspondence between different target differences and different AOAs, an AOA corresponding to the target difference value as the target AOA.

Preferably, the method further includes:
sending first capability information to the second device; wherein the first capability information is used for indicating whether the first device has a capability to support channel switching; and
receiving second capability information sent by the second device; wherein the second capability information is used for indicating whether the second device has a capability to support channel switching.

According to a second aspect of the present disclosure, an angle determination method is provided, which is applied to a second device, including:
transmitting a first signal to a first device on a first channel;
sending a channel switch message to a first device before completing an information interaction with the first device in a measurement report phase; and
transmitting a second signal to the first device on a second channel after switching from the first channel to the second channel; wherein the first signal and the second signal are used to determine a target angle of arrival AOA of a signal from the second device to the first device.

Optionally, sending the channel switch message to the first device before completing the information interaction with the first device in the measurement report phase includes:
sending the channel switch message to the first device after completing an information interaction with the first device in a ranging phase and before interacting with the first device with information in the measurement report phase.

Preferably, the method further includes:
receiving a control message sent by the first device in response to determining that the second device is a responder for responding ranging; wherein the control message carries a designated field, and the designated field is used for instructing the second device to send the channel switch message.

Optionally, the method further includes:
sending a control message to the first device in response to determining that the second device is an initiator for initiating ranging; wherein the control message carries a designated field, and the designated field is used for instructing the second device to send the channel switch message.

Preferably, the designated field is a ranging device management list RDML field.

Optionally, the designated field is used for indicating at least one of:
target time unit information of the channel switch message sent by the second device to the first device; wherein the target time unit information includes an indication that a target time unit of the channel switch message is located before a time unit where the first device and the second device complete the information interaction in the measurement ranging report phase; or
second channel identification.

Preferably, the number of the second device is more than one, and different second devices correspond to different target time units.

Optionally, the method further includes:
receiving first capability information sent by the second device; wherein the first capability information is used for indicating whether the first device has a capability to support channel switching; and
sending second capability information to the first device; wherein the second capability information is used for indicating whether the second device has a capability to support channel switching.

According to a third aspect of the present disclosure, an angle determination apparatus is provided, applied to a first device, including:
a first receiving module, configured to receive a channel switch message sent by a second device before completing an information interaction with the second device in a measurement report phase;
a channel switching module, configured to switch from a first channel to a second channel based on the channel switch message; wherein the first channel is used for the first device to receive a first signal transmitted by the second device and the second channel is used for the first device to receive a second signal transmitted by the second device; and
an angle determination module, configured to determine, according to the first signal and the second signal, a target angle of arrival AOA of a signal from the second device to the first device.

According to a fourth aspect of the present disclosure, an angle determination apparatus is provided, applied to a second device, including:
a first signal transmitting module, configured to transmit a first signal to a first device on a first channel;
a first sending module, configured to send a channel switch message to a first device before completing an information interaction with the first device in a measurement report phase; and
a second signal transmitting module, configured to transmit a second signal to the first device on a second channel after switching from the first channel to the second channel; wherein the first signal and the second signal are used to determine a target angle of arrival AOA of a signal from the second device to the first device.

According to a fifth aspect of the present disclosure, a computer-readable storage medium is provided, on which a computer program is stored, which, when executed by a processor, realizes the steps of the angle determination method according to the first aspect of the present disclosure.

According to a sixth aspect of the present disclosure, a computer-readable storage medium is provided, on which a computer program is stored, which, when executed by a processor, realizes the steps of the angle determination method according to the second aspect of the present disclosure.

According to a seventh aspect of the present disclosure, an angle determination apparatus is provided, including:
a processor; and
a memory, configured to store processor-executable instructions;
wherein the processor is configured to execute the executable instructions to realize the steps of the angle determination method according to the first aspect of the present disclosure.

According to an eighth aspect of an embodiment of the present disclosure, an angle determination apparatus is provided, including:
a processor; and
a memory, configured to store processor-executable instructions;
wherein the processor is configured to execute the executable instructions to realize the steps of the angle determination method according to the second aspect of the present disclosure.

The technical solutions provided by the present disclosure include the following beneficial effects.

In the present disclosure, the first device may receive a first signal transmitted by a second device on a first channel, and receive a channel switch message sent by a second device before completing the ranging report information interaction with the second device, and based on the channel switch message, the first channel is switched to a second channel to receive a second signal transmitted by the second device. The first device may determine a target angle of arrival AOA of a radio frequency signal from the second device to the first device based on the first signal and the second signal. In the present disclosure, without adding a new ranging round, a unique target AOA of radio frequency signals from a second device to a first device based on signals transmitted by an opposite device in different channels before the completion of this round of ranging, thus saving communication resources and improving the reliability and accuracy of UWB ranging and positioning.

It should be understood that the above general descriptions and the following detailed descriptions are merely for exemplary and explanatory purposes, and cannot limit the present disclosure.

### BRIEF DESCRIPTION OF DRAWINGS

The accompanying drawings herein, which are incorporated into the specification and constitute a part of this specification, illustrate embodiments consistent with the present disclosure and, together with the specification, serve to explain the principles of the present disclosure.
FIG. 1A is a schematic diagram of a correspondence between a receiving phase difference and an incident angle under an antenna spacing according to an embodiment of the present disclosure.
FIG. 1B is a schematic diagram of another correspondence between a receiving phase difference and an incident angle under an antenna spacing according to an embodiment of the present disclosure.
FIG. 2 is a flowchart of an angle determination method according to an embodiment of the present disclosure.
FIG. 3A is a schematic diagram of FiRa messages according to an embodiment of the present disclosure.
FIG. 3B is a schematic diagram of a ranging round according to an embodiment of the present disclosure.
FIG. 3C is a flowchart of a two-way ranging method according to an embodiment of the present disclosure.
FIG. 3D is another schematic diagram of FiRa messages according to an embodiment of the present disclosure.
FIG. 3E is a schematic diagram of a ranging round according to an embodiment of the present disclosure.
FIG. 4A is a flowchart of another angle determination method according to an embodiment of the present disclosure.
FIG. 4B is a schematic diagram of a correspondence curve between different target differences and different AOAs according to an embodiment of the present disclosure.
FIG. 5 is a flowchart of another angle determination method according to an embodiment of the present disclosure.
FIG. 6 is a schematic diagram of another ranging round according to an embodiment of the present disclosure.
FIG. 7 is a block diagram of an angle determination apparatus according to an embodiment of the present disclosure.
FIG. 8 is a block diagram of another angle determination apparatus according to an embodiment of the present disclosure.
FIG. 9 is a block diagram of an angle determination apparatus according to an embodiment of the present disclosure.
FIG. 10 is a block diagram of another angle determination apparatus according to an embodiment of the present disclosure.

### DETAILED DESCRIPTION

Exemplary embodiments will be described in detail here, examples of which are illustrated in the accompanying drawings. When the following description relates to the accompanying drawings, unless specified otherwise, the same numerals in different accompanying drawings represent the same or similar elements. Implementations described in the following embodiments do not represent all implementations consistent with the present disclosure. Rather, they are merely examples of apparatuses and methods consistent with some aspects of the present disclosure as detailed in the appended claims.

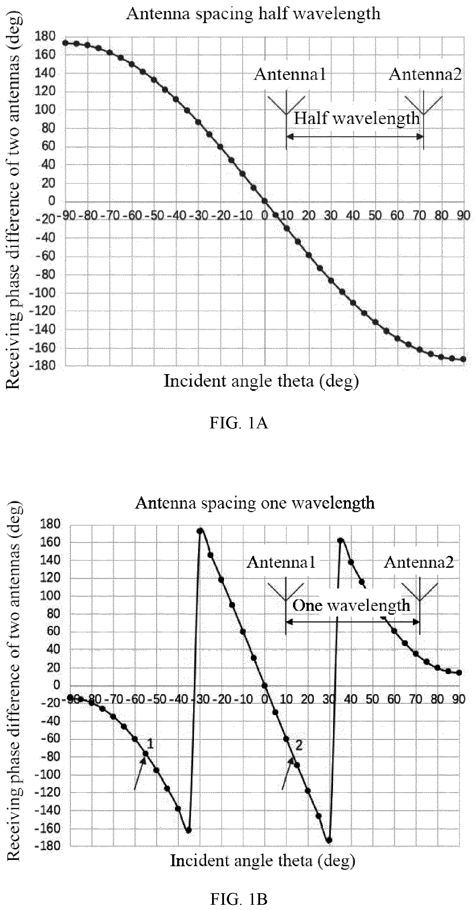

In order to realize an AoA function of UWB in an electronic device, a physical distance between two antennas of the electronic device is usually required to be less than or equal to half the wavelength, such as that shown in FIG. 1A, wherein a receiving phase difference between the two antennas is unique in half a space (±90°).

However, due to a limitation of hardware stack of the electronic device, two antennas may not be deployed within a half-wavelength distance. When the physical distance between the two antennas is greater than half the wavelength, it will cause the problem that the AOA determined based on the receiving phase difference of the two antennas is not unique, so it is impossible to judge a correct direction of a radio frequency signal reaching the electronic device. For example, as shown in FIG. 1B, when the distance between two antennas on an electronic device reaches a wavelength, the receiving phase difference between the two antennas is -80°, a corresponding incident direction may be -55° (with reference to a location of point 1 in FIG. 1B), or it may be 12° (with reference to a location of point 2 in FIG. 1B), which leads to the electronic device cannot accurately determine the AOA.

In order to solve the above technical problems, the present disclosure provides the following angle determination methods and apparatuses, and storage media, which can determine a unique target AOA of a radio frequency signal from a second device to a first device based on signals transmitted by an opposite-end device in different channels before the completion of this round of ranging, thus saving communication resources and improving the reliability and accuracy of UWB ranging and positioning.

The angle determination methods provided by the present disclosure will be introduced below from a first device side.

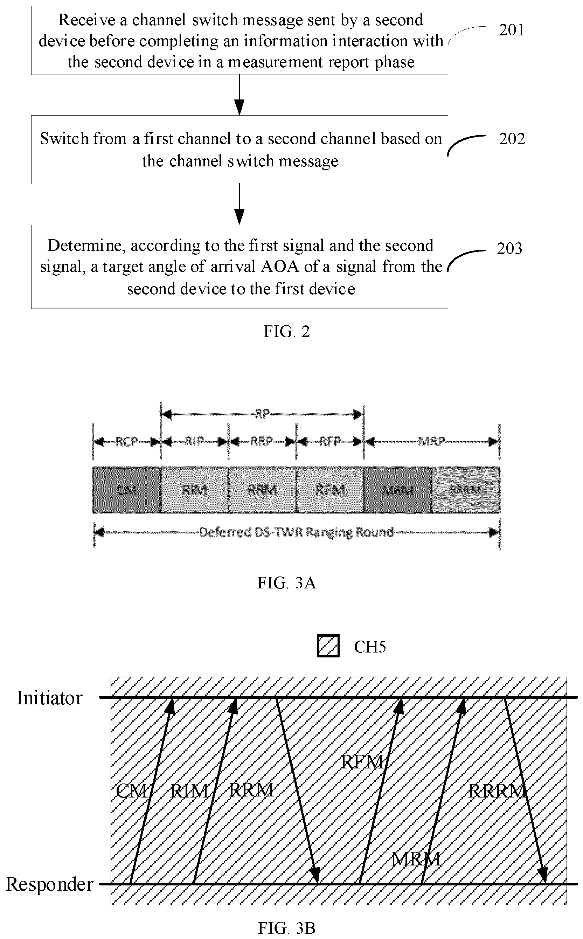

FIG. 2 is a flowchart of an angle determination method according to an embodiment of the present disclosure, which is described from a first device side, wherein the first device is a device for measuring AOA, the first device can be a terminal, including but not limited to a mobile phone, a notebook computer, a desktop computer, a tablet computer, etc., and the first device can also be a wearable electronic device, including but not limited to a smart bracelet, a smart watch, etc. As shown in FIG. 2, the angle determination method includes the following steps.

At step 201, a channel switch message sent by a second device is received before completing an information interaction with the second device in a measurement report phase.

In an embodiment of the present disclosure, the second device may be a terminal, including but not limited to a mobile phone, a notebook computer, a desktop computer, a tablet computer, etc., and the second device may also be a wearable electronic device, including but not limited to a smart bracelet, a smart watch, etc., which is not limited by the present disclosure.

A process of determining an angle between the first device and the second device can be based on the fine ranging (FiRa) specification, and before the first device and the second device complete the information interaction in a measurement report phase (MRP), a media access control (MAC) layer message sent by the second device is received, which can be a channel switch message (CSM).

In an embodiment of the present disclosure, the CSM is used for instructing the first device to switch to a second channel to receive a second signal transmitted by the second device. The first device receives a first signal transmitted by the second device on the first channel before switching to the second channel. The first signal and the second signal are radio frequency signals.

At step 202, a first channel is switched to a second channel based on the channel switch message.

In an embodiment of the present disclosure, the first device receives the channel switch message and switches to the second channel to receive the second signal transmitted by the second device.

At step 203, a target AOA of a signal from the second device to the first device is determined according to the first signal and the second signal.

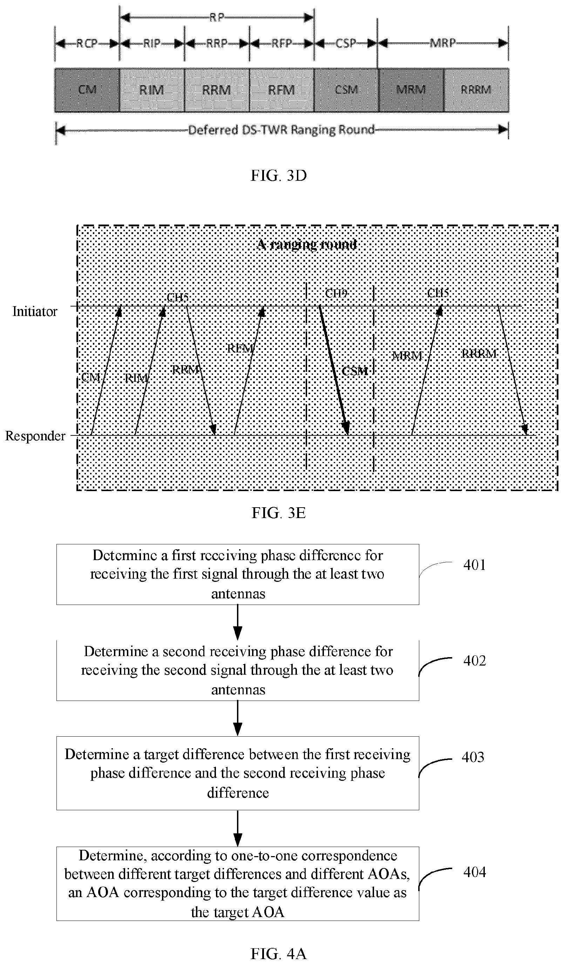

In an embodiment of the present disclosure, a first device may determine a first receiving phase difference for receiving a first signal and a second receiving phase difference for receiving a second signal, and determine a unique target AOA based on a target difference between the first receiving phase difference and the second receiving phase difference. The specific determination method will be introduced in the embodiment shown in FIG. 4A.

In the above embodiment, without adding a new ranging round, a unique target AOA of radio frequency signals from the second device to the first device can be determined based on signals transmitted by an opposite-end device (second device) in different channels before the completion of this round of ranging, thus saving communication resources and improving the reliability and accuracy of UWB ranging and positioning.

In some embodiments, FIG. 3A is a schematic diagram of FiRa messages according to an embodiment of the present disclosure, and FIG. 3B is a schematic diagram of a ranging round according to an embodiment of the present disclosure.

As shown in FIGS. 3A and 3B, the electronic device can perform a two-way ranging (TRW) on CH5 (channel 5) through an ultra-wide band. The two-way ranging includes, but is not limited to, unilateral two-way ranging, and bilateral two-way ranging. In the two-way ranging, a ranging round mainly includes:

In a ranging control phase (RCP), an initiator that initiates ranging sends a control message (CM) to a responder that responds to the ranging in the first channel.

In a ranging initiation phase (RIP), the initiator sends a ranging initiation message (RIM) to the responder on the first channel.

In a ranging response phase (RRP), the responder sends a ranging response message (RRM) to the initiator on the first channel.

In a ranging final phase (RFP), the initiator sends a ranging final message (RFM) to the responder on the first channel.

The aforementioned RIP, RRP and RFP can be collectively referred to as a ranging phase (RP).

In a measurement report phase (MRP), the initiator sends a measurement report message (MRM) to the responder on the first channel.

In the MRP, the responder sends a ranging result report message (RRRM) to the initiator on the first channel.

The RIM means that the initiator sends a ranging message to the responder, the RRM means that the responder sends a ranging message to the initiator, the RFM means that the initiator sends the last packet of ranging data to the responder, the MRM is used for exchanging timestamp information between the initiator and the responder, and the RRRM is used for the responder to report ranging information.

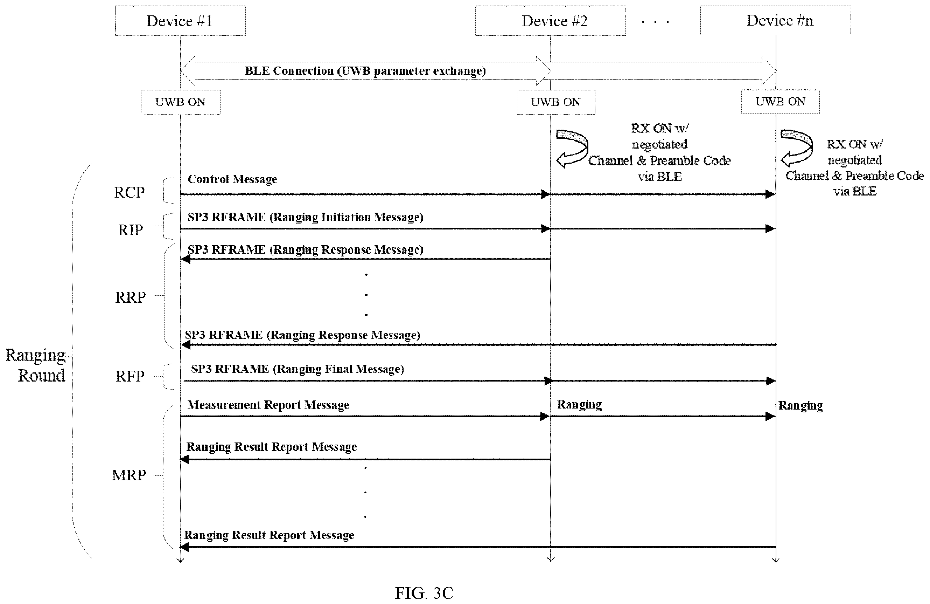

An example of its ranging process interaction diagram is shown in FIG. 3C, wherein device #1 serves as the initiator, and device 2, ......, device #n serve as the responder. The interaction process is similar to the process shown in FIG. 3B and will not be repeated here.

Based on FIGS. 3B and 3C, it can be seen that the above process can be used as a ranging round, and in order to avoid adding a new ranging round and to accurately determine the target AOA, the present disclosure provides another schematic diagram of FiRa messages, such as that shown in FIG. 3D, and another schematic diagram of a ranging round, such as that shown in FIG. 3E.

After completing an information interaction with the second device in a ranging phase and before interacting with the second device with information in the measurement report phase, the first device receives the channel switch message sent by the second device.

Specifically, before the MRP after the RP, the first device may receive the channel switch message sent by the second device, the first device is a device that needs to measure the target AOA.

For example, after the initiator sends the RFM to the responder on the first channel, and before the initiator sends the MRM to the responder on the first channel, the first device receives the above channel switch message sent by the second device.

In a possible implementation, if the first device is the initiator, the first device may carry a designated field in the CM sent to the second device, and the designated field is used to instruct the second device to send the channel switch message.

In another possible implementation, if the first device is the responder, the first device may receive a CM sent by the second device, and the CM carries a designated field, which is used to instruct the second device to send the channel switch message.

In an embodiment of the present disclosure, the designated field can re-use a ranging device management list (RDML) field in the CM. Further, reserved elements in the RDML field can be re-used.

Some of the fields carried in the control message can be shown in Table 1 below.

**Table 1**

| Parameter | Size (bits) | Notes |
|---|---|---|
| Vendor OUI | 24 | 0x5A18FF |
| UWB message ID | 4 | 0x3= Control Message |
| Suspend Ranging | 1 | 0: Ranging Round is not suspended |
| | | 1: Ranging Round is suspended |
| Reserved | 3 | Reserved for future use |
| Message control | 16 | Configuration of the message |
| Stride length | 8 | Number of blocks to be skipped |
| Ranging device management list | Variable | List of ranging role, ranging slot index, and address for ranging device |

Some elements included in the RDML field are shown in Table 2 for example.

**Table 2**

| Parameter | Size (bits) | Notes |
|---|---|---|
| Ranging Role | 1 | 0: Responder |
| | | 1: Initiator |
| Ranging Slot Index | 8 | Assigned slot |
| Address | 16 | Address of ranging device |
| Scheduled UWB Message | 4 | ID of UWB message which will be conveyed in the slot |
| Stop Ranging | 1 | 0: Ranging will be continued |
| | | 1: Ranging will be stopped |
| Reserved | 2 | Reserved for future use |

In the present disclosure, the second device may be instructed to send the channel switch message by extending the reserved element of the RDMI, field.

In a possible implementation, the designated field can be used to indicate at least one of the following: target time unit information of the channel switch message sent by the second device to the first device, wherein the target time unit information includes an indication that a target time unit of the channel switch message is located before a time unit wherein the first device and the second device complete the information interaction in the measurement ranging report phase; or second channel identification.

In an embodiment of the present disclosure, the target time unit may be in a unit of a slot.

Correspondingly, the elements shown in Table 2 can be adjusted to the following Table 3.

| Parameter | Size (bits) | Notes |
|---|---|---|
| Ranging Role | 1 | 0: Responder |
| | | 1: Initiator |
| Ranging Slot Index | 8 | Assigned slot |
| Address | 16 | Address of ranging device |
| Scheduled UWB Message | 4 | ID of UWB message which will be conveyed in the slot |
| Stop Ranging | 1 | 0: Ranging will be continued |
| | | 1: Ranging will be stopped |
| Channel number | 2 | Indicates the channel in which the following ranging round measurement is performed |
| | | 00: Channel 5 |
| | | 01: Channel 6 |
| | | 10: Channel 8 |
| | | 11: Channel 9 |

In some embodiments, a ranging round (including channel switching) may be agreed through a message including the RDML field, in which it can be agreed that the second device (Controllee #1 in Table 4) as the responder sends the CSM, as shown in Table 4. It can be understood that Table 4 is only an example, and the transmission order of channel switch message can also be adjusted according to actual needs, which is not limited by the present disclosure.

**Table 4**

| Element | Ranging Role | Ranging Slot Index | Address | Scheduled UWB Message | Stop Ranging | Channel |
|---|---|---|---|---|---|---|
| 1 | 1 | 1 | Address of Controller | 0 (RIM) | 0 | 0b00 |
| 2 | 0 | 2 | Address of Controllee #1 | 1 (RRM) | 0 | 0b00 |
| 3 | 1 | 3 | Address of Controller | 2 (RFM) | 0 | 0b00 |
| 4 | 0 | 4 | Address of Controllee# 1 | 1 or new #ID for CSM | 0 | 0b11 |
| 5 | 0 | 5 | Address of Controller | 4 (MRM T1) | 0 | 0b00 |
| 6 | 0 | 6 | Address of Controllee #1 | 5 (RRRM) | | 0b00 |

It should be noted that the channel switch message is sent on the second channel, such as CH9 (channel 9), and other messages, such as RIM, RRM, RFM, MRM and RRRM, are still sent on the first channel, such as CH5.

In the above embodiment, the second device can be instructed to send the channel switch message through a designated field, so that the first device can determine the target AOA based on the radio frequency signals received by different channels. The designated field re-uses the RDML field, and instructs the second device to send channel switch message in the target time unit, and the target time unit is located before a time unit when the first device and the second device complete the information interaction in the measurement report phase, so there is no need to add a new ranging round. Before this round of ranging is completed (that is, before the first device and the second device complete the information interaction in the measurement report phase), a unique target AOA of radio frequency signals from the second device to the first device can be determined based on signals transmitted by an opposite-end device in different channels before the completion of this round of ranging, thus saving communication resources and improving the reliability and accuracy of UWB ranging and positioning.

In some embodiments, the solution of the present disclosure is not only applicable to a 1-to-1 UWB ranging process, but also applicable to a 1-to-many ranging process.

In a possible implementation, there are multiple second devices, and different second devices correspond to different target time units. And different target time units are all located before the time unit when the first device and the second device complete the information interaction in the measurement report phase.

Correspondingly, Table 4 can be expanded to obtain Table 5, wherein multiple second devices include Controllee#1, Controllee#2, ..., Controllee#n in Table 5.

**Table 5**

| Element | Ranging Role | Ranging Slot Index | Address | Scheduled UWB Message | Stop Ranging | Channel |
|---|---|---|---|---|---|---|
| 1 | 1 | 1 | Address of Controller | 0 (RIM) | 0 | 0b00 |
| 2 | 0 | 2 | Address of Controllee #1 | 1 (RRM) | 0 | 0b00 |
| 3 | 1 | 3 | Address of Controller | 2 (RFM) | 0 | 0b00 |
| 4 | 0 | 4 | Address of Controllee# 1 | 1 or new #ID for CSM | 0 | 0b11 |
| 4 | 0 | 5 | Address of Controllee#2 | 1 or new #ID for CSM | 0 | 0b11 |
| ...... | ...... | ...... | ...... | ...... | ...... | ...... |
| 4 | 0 | n | Address of Controllee#n | ...... | ...... | ...... |
| 5 | 0 | n+1 | Address of Controller | 4 (MRM T1) | 0 | 0b00 |
| 6 | 0 | n+2 | Address of Controllee #1 | 5 (RRRM) | | 0b00 |

It should be noted that the channel switch message is sent on the second channel, such as CH9, and other messages, such as RIM, RRM, RFM, MRM and RRRM, are still sent on the first channel, such as CH5.

In the above embodiment, it is possible to accurately determine the target AOA of the first device from different second devices through channel switching in 1-to-1 and 1-to-many scenarios, which is simple to implement and has high availability.

In some embodiments, the channel switch message CSM may be sent in a form of an SP3 Frame (frame format 3). Data in RCP and MRP may be sent in a form of SP0 Frame. SP3 is shorter than SP0, and its transmission reliability is higher, so it can realize UWB ranging in a longer distance.

In some embodiments, FIG. 4A is a flowchart of another angle determination method illustrated based on the embodiment shown in FIG. 2 of the present disclosure, which is described from the first device side, and step 203 may include the following steps.

At step 401, a first receiving phase difference for receiving the first signal through the at least two antennas is determined.

The present disclosure takes two antennas as an example, and assumes that a phase of antenna #1 receiving the first signal is phase #11, a phase of antenna #2 receiving the first signal is phase #12, and the first receiving phase difference is phase #11 - phase #12.

At step 402, a second receiving phase difference for receiving the second signal through the at least two antennas is determined.

Assume that a phase of antenna #1 receiving the second signal is phase #21, a phase of antenna #2 receiving the second signal is phase #22, and the second receiving phase difference is phase #21 - phase #22.

At step 403, a target difference between the first receiving phase difference and the second receiving phase difference is determined. The target difference is a difference obtained by subtracting the second receiving phase difference from the first receiving phase difference, or a difference obtained by subtracting the first receiving phase difference from the second receiving phase difference.

At step 404, according to one-to-one correspondence between different target differences and different AOAs, an AOA corresponding to the target difference value is determined as the target AOA.

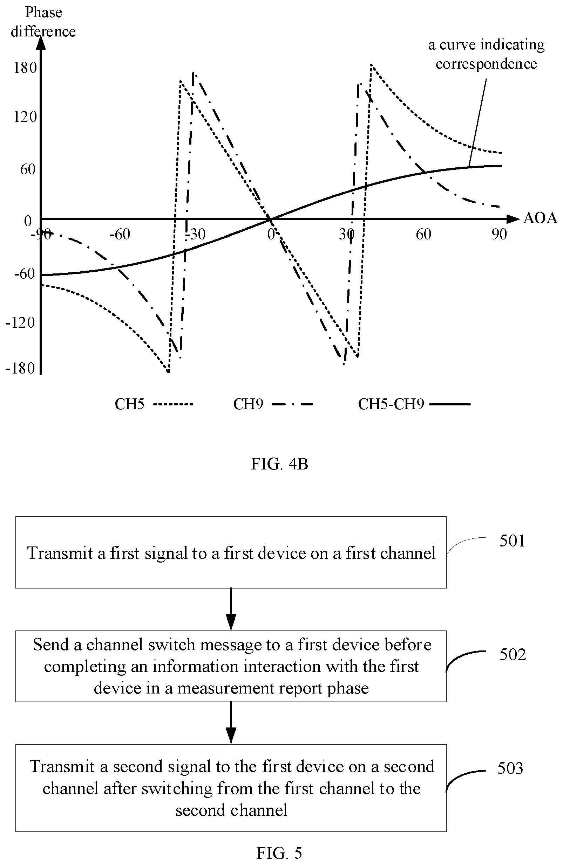

In an embodiment of the present disclosure, a correspondence curve between different target differences and different AOAs is shown in, for example, FIG. 4B. According to the correspondence curve shown in FIG. 4B, it can be seen that there is a one-to-one correspondence between different target differences and different AOAs, so the AOA corresponding to the target difference calculated in step 403 can be determined as the unique target AOA.

In the above embodiment, a unique target AOA of radio frequency signals from the second device to the first device can be determined based on signals transmitted by an opposite-end device in different channels before the completion of this round of ranging, thus saving communication resources and improving the reliability and accuracy of UWB ranging and positioning.

In some embodiments, before ranging, the first device and the second device may interact in advance, by means of Out of Band (OOB), whether they have the capability to support channel switching.

The OOB mode includes but is not limited to a Bluetooth mode.

In a possible implementation, the first device sends first capability information to the second device via Bluetooth; wherein the first capability information is used for indicating whether the first device has a capability to support channel switching. In addition, the first device can receive second capability information sent by the second device; wherein the second capability information is used for indicating whether the second device has a capability to support channel switching.

If both the first device and the second device have the ability to support channel switching, the above solution can be adopted to determine the target AOA. If either the first device or the second device does not have the ability to support channel switching, the second device should not be configured to send channel switch message in the designated field.

In another possible implementation, if the first device and the second device can't interact with the above capability information, the device at the opposite end may be defaulted to have the capability to support channel switching, and further, if the first device does not receive the channel switch message sent by the second device at the target time unit, and it may be determined that the second device does not have the capability to support channel switching.

Or, the first device receives channel switch message sent by the second device, but the first device does not have the ability to support channel switching, and if the second device does not receive data or information sent by the first device during a specified time period including a target time unit, it is determined that the first device does not have the capability to support channel switching.

In the above embodiment, devices participating in UWB ranging can interact with each other in advance whether they support channel switching or not, thus improving the compatibility of the angle determination method in the present disclosure.

Next, the angle determination method provided by the present disclosure will be introduced below from a second device side.

FIG. 5 is a flowchart of an angle determination method according to an embodiment of the present disclosure, which is described from a second device side, the second device can be a terminal, including but not limited to a mobile phone, a notebook computer, a desktop computer, a tablet computer, etc., and the second device can also be a wearable electronic device, including but not limited to a smart bracelet, a smart watch, etc. As shown in FIG. 5, the angle determination method includes the following steps.

At step 501, a first signal is transmitted to a first device on a first channel.

In an embodiment of the present disclosure, the first device is a device for measuring AOA. The first device may be a terminal, including but not limited to a mobile phone, a notebook computer, a desktop computer, a tablet computer, etc., and the first device may also be a wearable electronic device, including but not limited to a smart bracelet, a smart watch, etc.

The first signal may be a radio frequency signal.

At step 502, a channel switch message is sent to a first device before completing an information interaction with the second device in a measurement report phase.

In an embodiment of the present disclosure, a process of determining an angle between the first device and the second device can be based on the FiRa specification, and before the second device and the first device complete the MRP information interaction, the second device sends a MAC layer message to the first device performing angle measurement, which can be a channel switch message (CSM).

In an embodiment of the present disclosure, the CSM is used for instructing the first device to switch to a second channel to receive a second signal transmitted by the second device.

At step 503, a second signal is transmitted to the first device on a second channel after switching from the first channel to the second channel.

In an embodiment of the present disclosure, while the second device sends a channel switching message, it switches itself from the first channel to the second channel, and transmits a second signal to the first device on the second channel. The second signal may be a radio frequency signal.

In an embodiment of the present disclosure, the first signal and the second signal are used for determining a target AOA of a radio frequency signal from the second device to the first device. The specific method for determining the target AOA has been introduced on the first device side, and will not be repeated here.

In the above embodiment, there is no need to add a new ranging round, and the second device can send channel switch message to the first device before this ranging round is completed, and send the first signal to the first device in the first channel before switching and send the second signal to the second channel after switching respectively, so that the first device can determine the only target AOA. While saving communication resources, the reliability and accuracy of UWB ranging and positioning are improved.

In some embodiments, the second device sends the channel switch message to the first device after completing an information interaction with the first device in a ranging phase and before interacting with the first device with information in the measurement report phase.

Specifically, channel switch message may be sent by the second device to the first device that needs to measure the target AOA before the MRP after the RP.

For example, after the initiator sends the RFM to the responder on the first channel, and before the initiator sends the MRM to the responder on the first channel, the second device sends the above-mentioned channel switch message to the first device.

In another possible implementation, if the second device is the responder, the second device can receive a CM sent by the first device, and the CM carries a designated field, which is used to instruct the second device to send the channel switch message.

In another possible implementation, if the second device is the initiator, the second device may send a CM to the first device, and the CM carries a designated field, which is used to instruct the second device to send the channel switch message.

In an embodiment of the present disclosure, the designated field can re-use the RDML field in the CM. Further, reserved elements in the RDML field can be re-used.

In the present disclosure, the second device may be instructed to send the channel switch message by extending the reserved element shown in Table 2. In a possible implementation, the designated field can be used to indicate at least one of the following: target time unit information of the channel switch message sent by the second device to the first device; wherein the target time unit information includes an indication that a target time unit of the channel switch message is located before a time unit where the first device and the second device complete the information interaction in the measurement report phase; or second channel identification.

In an embodiment of the present disclosure, the target time unit may be in a unit of a slot.

Correspondingly, the elements shown in Table 2 can be adjusted to the elements shown in Table 2. The specific method has been introduced on the first device side, and will not be repeated here.

In some embodiments, the solution of the present disclosure is not only applicable to a 1-to-1 UWB ranging process, but also applicable to a 1-to-many ranging process.

In a possible implementation, there are multiple second devices, and different second devices correspond to different target time units. And different target time units are all located before the time unit when the first device and the second device complete the information interaction in the measurement report phase.

Correspondingly, Table 4 can be expanded to obtain Table 5, wherein multiple second devices include Controllee#1, Controllee#2, ..., Controllee#n in Table 5, and the specific solution has been introduced on the first device side, so it will not be repeated here.

In some embodiments, the channel switch message CSM may be sent in the form of an SP3 Frame (frame format 3). Data in RCP and MRP may be sent in the form of SP0 Frame. SP3 is shorter than SP0, and its transmission reliability is higher, so it can realize UWB ranging in a longer distance.

In some embodiments, before ranging, the first device and the second device may interact in advance, by means of Out of Band (OOB), whether they have the capability to support channel switching.

The OOB mode includes but is not limited to a Bluetooth mode.

In a possible implementation, the second device receives the first capability information sent by the first device via Bluetooth; wherein the first capability information is used for indicating whether the first device has a capability to support channel switching. In addition, the second device can send the second capability information to the first device; wherein the second capability information is used for indicating whether the second device has a capability to support channel switching.

If both the first device and the second device have the ability to support channel switching, the above solution can be adopted to determine the target AOA. If either the first device or the second device does not have the ability to support channel switching, the second device should not be configured to send channel switch message in the designated field.

In another possible implementation, if the first device and the second device can't interact with the above capability information, the device at the opposite end may be defaulted to have the capability to support channel switching, and further, the first device does not receive the channel switch message sent by the second device at the target time unit, and it may be determined that the second device does not have the capability to support channel switching.

Or, the first device receives channel switch message sent by the second device, but the first device does not have the ability to support channel switching, and if the second device does not receive data or information sent by the first device during a specified time period including a target time unit, it is determined that the first device does not have the capability to support channel switching.

In the above embodiment, devices participating in UWB ranging can interact with each other in advance whether they support channel switching or not, thus improving the compatibility of the angle determination method in the present disclosure.

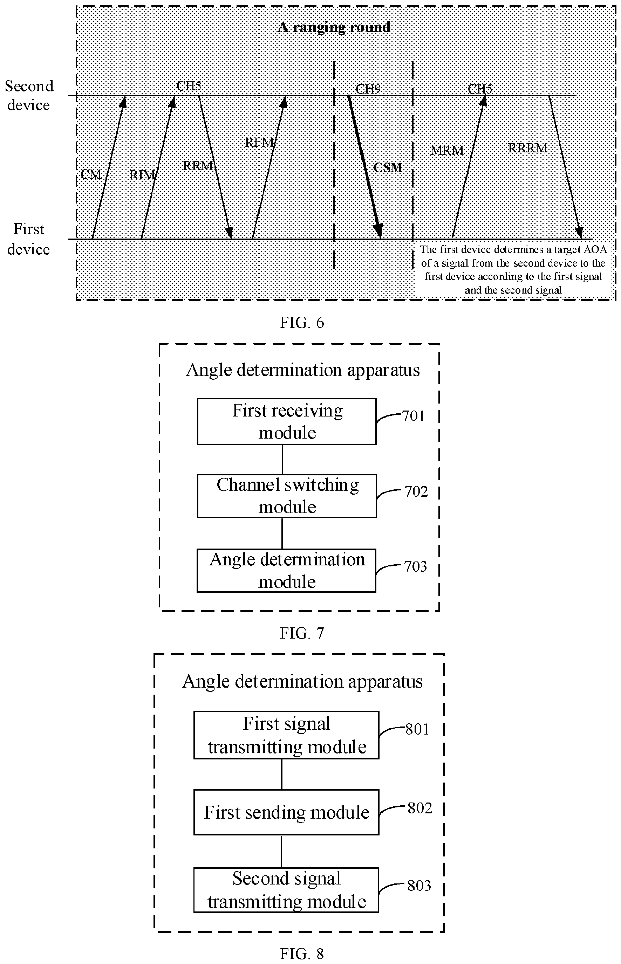

In some embodiments, the present disclosure further provides a flow diagram of a two-way ranging method with channel switching. A first channel is CH5, a second channel is CH9, a first device is an initiator, a second device is a responder, and a target AOA is determined by the first device. The method is shown with reference to FIG. 6, including:

First, the first device (as an initiator) sends a CM to the second device (as a responder), which is sent at slot 0 of each ranging round.

The designated field reuses the RDML field in the CM and the designated field is used for indicating at least one of: target time unit information of the channel switch message sent by the second device to the first device; or second channel identification.

The target time unit information includes an indication that a target time unit of the channel switch message is located before a time unit wherein the first device and the second device complete the information interaction in the measurement report phase.

Next, the first device transmits a RIM to the second device on CH5.

Next, the first device transmits a RRM to the second device on CH5.

Next, the second device transmits a RFM to the first device on CH5.

Next, the second device transmits CSM to the first device on CH9.

The second device transmits channel switch message to the first device on channel 9 (CH9) based on the indication of the designated field.

Next, the first device transmits an MRM to the second device on CH5.

Next, the second device transmits a RRRM to the first device on CH5.

Finally, the first device determines a target AOA of a signal from the second device to the first device according to the first signal and the second signal.

In an embodiment of the present disclosure, the operation of the second device transmitting the first signal to the first device on the first channel may be performed before sending the CSM. The operation of transmitting the second signal to the first device on the second channel may be performed after transmitting the CSM. The first signal, the second signal and the channel switch message all need to be sent to the first device in this round process.

In the above embodiment, since the second device sends channel switch message to the first device before completing the information interaction in the measurement report phase between the first device and the second device, no new ranging round will be added, and a unique target AOA of radio frequency signals from the second device to the first device can be determined based on signals transmitted by an opposite-end device in different channels before the completion of this round of ranging, thus saving communication resources and improving the reliability and accuracy of UWB ranging and positioning.

Corresponding to the above method embodiments implementing application functions, the present disclosure further provides embodiments of apparatuses implementing application functions.

Referring to FIG. 7, FIG. 7 is a block diagram of an angle determination apparatus according to an embodiment of the present disclosure, which is applied to a first device and includes:
a first receiving module 701, configured to receive a channel switch message sent by a second device before completing an information interaction with the second device in a measurement report phase;
a channel switching module 702, configured to switch from a first channel to a second channel based on the channel switch message; wherein the first channel is used for the first device to receive a first signal transmitted by the second device and the second channel is used for the first device to receive a second signal transmitted by the second device;
an angle determination module 703, configured to determine, according to the first signal and the second signal, a target angle of arrival AOA of a signal from the second device to the first device.

The specific implementation is similar to the embodiment shown in FIG. 2 and will not be repeated herein.

In some examples, the first receiving module includes:
a receiving submodule, configured to receive the channel switch message sent by the second device after completing an information interaction with the second device in a ranging phase and before interacting with the second device with information in the measurement report phase.

The specific implementation is similar to the embodiment shown in FIG. 3C and will not be repeated herein.

In some examples, the apparatus further includes:
a second sending module, configured to send a control message to the second device in response to determining that the first device is an initiator for initiating ranging; wherein the control message carries a designated field, and the designated field is used for instructing the second device to send the channel switch message.

In some examples, the apparatus further includes:
a third sending module, configured to receive a control message sent by the second device in response to determining that the first device is a responder for responding ranging; wherein the control message carries a designated field, and the designated field is used for instructing the second device to send the channel switch message.

In some examples, the designated field is a ranging device management list RDML field.

In some examples, the designated field is used for indicating at least one of:
target time unit information of the channel switch message sent by the second device to the first device; wherein the target time unit information includes an indication that a target time unit of the channel switch message is located before a time unit wherein the first device and the second device complete the information interaction in the measurement report phase; or
second channel identification.

The specific implementation is similar to the embodiments corresponding to FIG. 3C and TABLE 3 and will not be repeated herein.

In some examples, the number of the second device is more than one, and different second devices correspond to different target time units.

The specific implementation is similar to the embodiments corresponding to FIG. 3C and Table 4 and will not be repeated herein.

In some examples, at least two antennas are deployed on the first device, and the angle determination module includes:
a first determination sub-module, configured to determine a first receiving phase difference for receiving the first signal through the at least two antennas;
a second determination submodule, configured to determine a second receiving phase difference for receiving the second signal through the at least two antennas;
a third determination sub-module, configured to determine a target difference between the first receiving phase difference and the second receiving phase difference;

A fourth determination sub-module, configured to determine an AOA corresponding to the target difference value as the target AOA according to one-to-one correspondence between different target differences and different AOAs.

The specific implementation is similar to the embodiments corresponding to FIG. 4A and FIG. 4B and will not be described again here.

In some examples, the apparatus further includes:
a fourth sending module, configured to send first capability information to the second device; wherein the first capability information is used for indicating whether the first device has a capability to support channel switching;
a second receiving module, configured to receive second capability information sent by the second device; wherein the second capability information is used for indicating whether the second device has a capability to support channel switching.

The specific implementation is similar to that corresponding to the embodiment in which the first device side interacts with the second device via the OOB mode as to whether or not the respective device has the ability to support channel switching, and will not be repeated herein.

Referring to FIG. 8, FIG. 8 is a block diagram of an angle determination apparatus according to an embodiment of the present disclosure, which is applied to a second device and includes:
a first signal transmitting module 801, configured to transmit a first signal to a first device on a first channel;
a first sending module 802, configured to send a channel switch message to a first device before completing an information interaction with the first device in a measurement report phase;
a second signal transmitting module 803, configured to transmit a second signal to the first device on a second channel after switching from the first channel to the second channel; wherein the first signal and the second signal are used to determine a target angle of arrival AOA of a signal from the second device to the first device.

In some examples, the first sending module includes:
a sending submodule, configured to send the channel switch message to the first device after completing an information interaction with the first device in a ranging phase and before interacting with the first device with information in the measurement report phase.

In some examples, the apparatus further includes:
a third receiving module, configured to receive a control message sent by the first device in response to determining that the second device is a responder for responding ranging; wherein the control message carries a designated field, and the designated field is used for instructing the second device to send the channel switch message.

In some examples, the apparatus further includes:
a fourth receiving module, configured to send a control message to the first device in response to determining that the second device is an initiator for initiating ranging; wherein the control message carries a designated field, and the designated field is used for instructing the second device to send the channel switch message.

In some examples, the designated field is a ranging device management list RDML field.

In some examples, the designated field is used for indicating at least one of:
target time unit information of the channel switch message sent by the second device to the first device; wherein the target time unit information includes an indication that a target time unit of the channel switch message is located before a time unit wherein the first device and the second device complete the information interaction in the measurement ranging report phase; or
second channel identification.

The specific implementation is similar to the corresponding embodiments on the second device side and will not be repeated here.

In some examples, the number of the second device is more than one, and different second devices correspond to different target time units.

The specific implementation is similar to the corresponding embodiments on the second device side and will not be repeated here.

In some examples, the apparatus further includes:
a fifth receiving module, configured to receive first capability information sent by the second device; wherein the first capability information is used for indicating whether the first device has a capability to support channel switching;
a fifth sending module, configured to send second capability information to the first device; wherein the second capability information is used for indicating whether the second device has a capability to support channel switching.

The specific implementation is similar to that corresponding to the embodiment in which the second device side interacts with the first device via the OOB mode as to whether or not the respective device has the ability to support channel switching, and will not be repeated herein.

For the embodiments of the apparatus, since they basically correspond to the embodiments of the method, they may be referred to the partial description of the embodiments of the method. The apparatus examples described above are merely illustrative, wherein the units described as separate components may or may not be physically separated, and the components displayed as units may or may not be physical units, i.e., may be located in one place or may be distributed to multiple network units. Part or all of the modules may be selected according to actual requirements to implement the objectives of the solutions in the present disclosure. Those of ordinary skill in the art can understand and implement the present disclosure without any creative effort.

Correspondingly, the present disclosure further provides a computer readable storage medium for storing a computer program, which, when executed by a processor, is configured to implement the steps of the angle determination method described in any of the first device side.

Correspondingly, the present disclosure further provides a computer readable storage medium for storing a computer program, which, when executed by a processor, is configured to implement the steps of the angle determination method described in any of the second device side.

Correspondingly, the present disclosure further provides an angle determination apparatus, including:
a processor; and
a memory, configured to store processor-executable instructions;
wherein the processor is configured to execute the executable instructions to realize the steps of the angle determination method described in any one of the first device side.

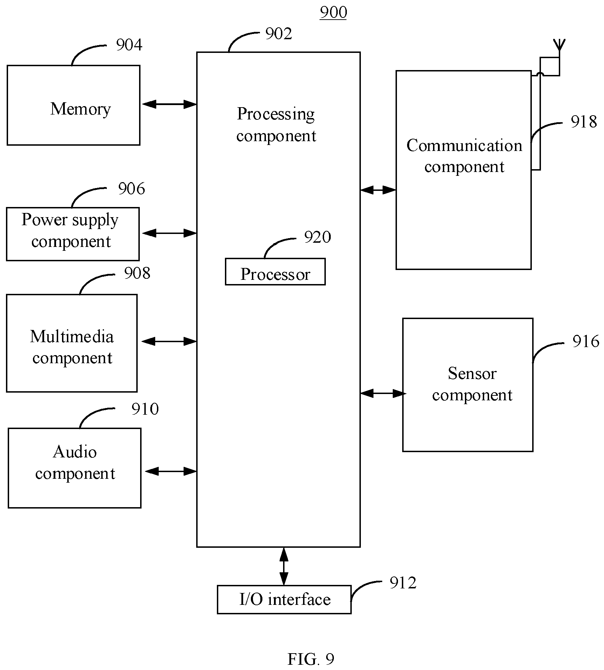

FIG. 9 is a block diagram of an angle determination apparatus according to an embodiment of the present disclosure. For example, the apparatus 900 can be a mobile phone, a computer, a digital broadcast terminal, a message transmitting and receiving device, a gaming console, a tablet device, a medical device, a fitness device, a personal digital assistant, and other terminals.

As shown in FIG. 9, the apparatus 900 may include one or more of the following components: a processing component 902, a memory 904, a power supply component 906, a multimedia component 908, an audio component 910, an input/output (I/O) interface 912, a sensor component 916, and a communication component 918.

The processing component 902 usually controls overall operations of the apparatus 900, such as operations related to display, a telephone call, data communication, a camera operation and a record operation. The processing component 902 may include one or more processors 920 to execute instructions to complete all or a part of the blocks of the above methods. In addition, the processing component 902 may include one or more modules which facilitate the interaction between the processing component 902 and other components. For example, the processing component 902 may include a multimedia module to facilitate the interaction between the multimedia component 908 and the processing component 902.

One of the processors 920 in the processing component 902 may be configured to perform the angle determination method described above.

The memory 904 is configured to store different types of data to support the operations of the apparatus 900. Examples of such data include instructions, contact data, phonebook data, messages, pictures, videos, and so on for any application or method that operates on the apparatus 900. The memory 904 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power supply component 906 provides power for different components of the electronic device 900. The power supply component 906 may include a power management system, one or more power sources, and other components associated with generating, managing and distributing power for the electronic device 900.

The multimedia component 908 includes a screen providing an output interface between the apparatus 900 and the user. In some embodiments, the screen may include a liquid crystal display (LCD) and a touch panel (TP). If the screen includes the TP, the screen may be implemented as a touch screen to receive input signals from the user. The TP may include one or more touch sensors to sense touches, swipes, and gestures on the TP. The touch sensor may not only sense the boundary of a touch or slide operation but also detect duration and pressure relating to the touch or slide operation. In some embodiments, the multimedia component 908 may include a front camera and/or a rear camera. When the apparatus 900 is in an operation mode, such as a shooting mode or a video mode, the front camera and/or the rear camera can receive external multimedia data. Each of the front camera and the rear camera may be a fixed optical lens system or have focal length and optical zooming capability.

The audio component 910 is configured to output and/or input an audio signal. For example, the audio component 910 may include a microphone (MIC). When the apparatus 900 is in an operating mode, such as a call mode, a recording mode and a speech recognition mode, the microphone is configured to receive an external audio signal. The received audio signal may be further stored in the memory 904 or sent via the communication component 918. In some examples, the audio component 910 further includes a speaker for outputting an audio signal.

The I/O interface 912 may provide an interface between the processing component 902 and peripheral interface modules. The above peripheral interface modules may include a keyboard, a click wheel, buttons and so on. These buttons may include but not limited to, a home button, a volume button, a start button and a lock button.

The sensor component 916 includes one or more sensors for providing state assessments in different aspects for the apparatus 900. For example, the sensor component 916 can detect an open/closed state of the apparatus 900, relative positioning of components, such as the components being a display and a keypad of the apparatus 900, and sensor component 916 can further detect a change in position of the apparatus 900 or a component of the apparatus 900, the presence or absence of user contact with the apparatus 900, orientation or acceleration/deceleration of the apparatus 900, and temperature change of the apparatus 900. The sensor component 916 may include a proximity sensor configured to detect presence of a nearby object without any physical contact. The sensor component 916 may also include a CMOS or CCD image sensor applied in an imaging application. In some embodiments, the sensor component 916 may further include an acceleration sensor, a gyro sensor, a magnetic sensor, a pressure sensor, or a temperature sensor.

The communication component 918 is configured to facilitate wired or wireless communication between the apparatus 900 and other devices. The apparatus 900 may access a wireless network based on a communication standard, such as WiFi, 2G, 3G, 4G, 5G, 6G or a combination thereof. In an exemplary embodiment, the communication component 918 receives a broadcast signal or broadcast related information from an external broadcast management system via a broadcast channel. In an exemplary embodiment, the communication assembly 918 may also include a Near Field Communication (NFC) module to facilitate short-range communications. For example, the NFC module may be implemented based on a radio frequency identification (RFID) technology, an infrared data association (IrDA) technology, an ultra-wide band(UWB) technology, a Bluetooth (BT) technology, and other technologies.

In an exemplary embodiment, the apparatus 900 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic elements, for executing the methods.

In an exemplary embodiment, a non-transitory computer readable storage medium including instructions, such as the memory 904 including instructions, is further provided. The above instructions may be executed by the processor 920 of the apparatus 900 to complete the above method. For example, the non-transitory computer-readable storage medium may be a ROM, a RAM, a CD-ROM, a magnetic tape, a floppy disc, an optical data storage device, and the like.

Correspondingly, the present disclosure further provides an angle determination apparatus, including:
a processor; and
a memory, configured to store processor-executable instructions;
wherein the processor is configured to execute the executable instructions to realize the steps of the angle determination method described in any one of the second device side.

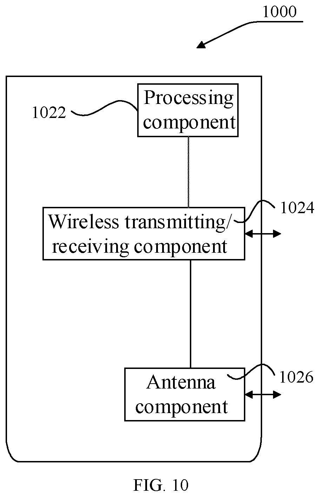

As shown in FIG. 10, FIG. 10 is a structural schematic diagram of an angle determination apparatus 1000 according to an embodiment of the present disclosure. The apparatus 1000 may be provided as a second device. Referring to FIG. 10, the apparatus 1000 includes a processing component 1022, a wireless transmitting/receiving component 1024, an antenna component 1026, and a signal processing portion specific to a wireless interface. The processing component 1022 may further include at least one processor.

One of the processors in the processing component 1022 may be configured to perform any angle determination method on the second device side described above.

It is to be noted that the relational terms such as "first" and "second" used herein are merely intended to distinguish one entity or operation from another entity or operation rather than to require or imply any such actual relation or order existing between these entities or operations. Also, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more restrictions, the elements defined by the sentence "including a ..." do not exclude the existence of other identical elements in the process, method, product or device including the element.

After considering the specification and practicing the present disclosure, the skilled in the art may easily conceive of other implementations of the present disclosure. The present disclosure is intended to include any variations, uses and adaptive changes of the present disclosure. These variations, uses and adaptive changes follow the general principle of the present disclosure and include common knowledge or conventional technical means in the prior art not disclosed in the present disclosure. The specification and examples herein are intended to be exemplary only and the real scope of the present disclosure are indicated by the claims of the present disclosure.

It should be understood that the present disclosure is not limited to the precise structures described above and shown in the accompanying drawings and may be modified or changed without departing from the scope of the present disclosure. The scope of protection of the present disclosure is limited only by the appended claims.

## Claims

1. An angle determination method, applied to a first device, comprising:
receiving (201) a channel switch message sent by a second device before completing an information interaction with the second device in a measurement report phase;
switching (202) from a first channel to a second channel based on the channel switch message; wherein the first channel is used for the first device to receive a first signal transmitted by the second device and the second channel is used for the first device to receive a second signal transmitted by the second device; and
determining (203), according to the first signal and the second signal, a target angle of arrival, AOA, of a signal from the second device to the first device.

2. The method according to claim 1, wherein receiving (201) the channel switch message sent by the second device before completing the information interaction with the second device in the measurement report phase comprises:
receiving the channel switch message sent by the second device after completing an information interaction with the second device in a ranging phase and before interacting with the second device with information in the measurement report phase.

3. The method according to claim 1 or 2, further comprising:
sending a control message to the second device in response to determining that the first device is an initiator for initiating ranging; wherein the control message carries a designated field, and the designated field is used for instructing the second device to send the channel switch message; or
receiving a control message sent by the second device in response to determining that the first device is a responder for responding ranging; wherein the control message carries a designated field, and the designated field is used for instructing the second device to send the channel switch message.

4. The method according to claim 3, wherein the designated field is a ranging device management list, RDML, field; and the designated field is used for indicating at least one of:
target time unit information of the channel switch message sent by the second device to the first device; wherein the target time unit information comprises an indication that a target time unit of the channel switch message is located before a time unit where the first device and the second device complete the information interaction in the measurement report phase; or
second channel identification.

5. The method according to claim 4, wherein a number of the second device is more than one, and different second devices correspond to different target time units.

6. The method according to any one of claims 1 to 5, wherein at least two antennas are deployed on the first device, and determining (203), according to the first signal and the second signal, the target AOA of the signal from the second device to the first device comprises:
determining (401) a first receiving phase difference for receiving the first signal through the at least two antennas;
determining (402) a second receiving phase difference for receiving the second signal through the at least two antennas;
determining (403) a target difference between the first receiving phase difference and the second receiving phase difference; and
determining (404), according to one-to-one correspondence between different target differences and different AOAs, an AOA corresponding to the target difference value as the target AOA.

7. The method according to any one of claims 1 to 6, further comprising:
sending first capability information to the second device; wherein the first capability information is used for indicating whether the first device has a capability to support channel switching; and
receiving second capability information sent by the second device; wherein the second capability information is used for indicating whether the second device has a capability to support channel switching.

8. An angle determination method, applied to a second device, comprising:
transmitting (501) a first signal to a first device on a first channel;
sending (502) a channel switch message to a first device before completing an information interaction with the first device in a measurement report phase; and
transmitting (503) a second signal to the first device on a second channel after switching from the first channel to the second channel; wherein the first signal and the second signal are used to determine a target angle of arrival, AOA, of a signal from the second device to the first device.

9. The method according to claim 8, wherein sending (502) the channel switch message to the first device before completing the information interaction with the first device in the measurement report phase comprises:
sending the channel switch message to the first device after completing an information interaction with the first device in a ranging phase and before interacting with the first device with information in the measurement report phase.

10. The method according to claim 8 or 9, further comprising:
receiving a control message sent by the first device in response to determining that the second device is a responder for responding ranging; wherein the control message carries a designated field, and the designated field is used for instructing the second device to send the channel switch message; or
sending a control message to the first device in response to determining that the second device is an initiator for initiating ranging; wherein the control message carries a designated field, and the designated field is used for instructing the second device to send the channel switch message.

11. The method according to claim 10, wherein the designated field is a ranging device management list, RDML, field; and the designated field is used for indicating at least one of:
target time unit information of the channel switch message sent by the second device to the first device; wherein the target time unit information comprises an indication that a target time unit of the channel switch message is located before a time unit where the first device and the second device complete the information interaction in the measurement ranging report phase; or second channel identification;
wherein a number of the second device is more than one, and different second devices correspond to different target time units.

12. The method according to any one of claims 8 to 11, further comprising:
receiving first capability information sent by the second device; wherein the first capability information is used for indicating whether the first device has a capability to support channel switching; and
sending second capability information to the first device; wherein the second capability information is used for indicating whether the second device has a capability to support channel switching.

13. An angle determination apparatus, applied to a first device, comprising:
a first receiving module (701), configured to receive a channel switch message sent by a second device before completing an information interaction with the second device in a measurement report phase;
a channel switching module (702), configured to switch from a first channel to a second channel based on the channel switch message; wherein the first channel is used for the first device to receive a first signal transmitted by the second device and the second channel is used for the first device to receive a second signal transmitted by the second device; and
an angle determination module (703), configured to determine, according to the first signal and the second signal, a target angle of arrival, AOA, of a signal from the second device to the first device.

14. An angle determination apparatus, applied to a second device, comprising:
a first signal transmitting module (801), configured to transmit a first signal to a first device on a first channel;
a first sending module (802), configured to send a channel switch message to a first device before completing an information interaction with the first device in a measurement report phase; and
a second signal transmitting module (803), configured to transmit a second signal to the first device on a second channel after switching from the first channel to the second channel; wherein the first signal and the second signal are used to determine a target angle of arrival, AOA, of a signal from the second device to the first device.

15. A computer readable storage medium, on which a computer program is stored, wherein a computer program is stored on the computer readable storage medium, and when the computer program is executed by a processor, the steps of the angle determination method according to any one of claims 1-7 or 8-12 are implemented.
